# EUROPEAN PATENT APPLICATION

(11) **EP 4 840 709 A1**
(43) Date of publication of application: **18.11.2026**
(21) Application number: 25176642.4
(22) Date of filing: 15.05.2025
(51) Int. Cl.: B60T 1/08, B60T 1/093, F16D 57/06

(54) **A BRAKING UNIT**

(71) Applicant: Volvo Truck Corporation, 405 08 Göteborg (SE)
(72) Inventor: LUNDGREN, Staffan, HINDÅS (SE)
(74) Representative: Ström & Gulliksson AB

(57) **Abstract**

The present invention relates to a braking unit (1) for a fuel cell electric vehicle (FCEV) or a battery electric vehicle (BEV) (100), the FCEV or the BEV comprising a battery, the braking unit comprising a hydraulic motor or a rotary gear pump (2) connected with a propulsion drive shaft (3) or a differential wheel of either of the FCEV or BEV, wherein at least one valve (4) is fluidly connected with the hydraulic motor or the rotary gear pump (2), the valve (4) is configured to control a fluid flow in and out of the hydraulic motor or the rotary gear pump (2) so as to assist in braking the FCEV or BEV.

## Description

### TECHNICAL FIELD

The disclosure relates generally to braking of an electric vehicle or a fuel cell electric vehicle. In particular aspects, the disclosure relates to a braking unit. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Traditional braking methods, such as compression braking or the use of additional retarders common in internal combustion engine (ICE) vehicles, are not feasible in FCEVs and BEVs due to the absence of piston systems. This creates unique challenges for braking in these types of vehicles.

A significant problem arises during steep hill braking scenarios, where the energy recovered and fed back into the battery through regenerative braking is insufficient. This can lead to overheating of the conventional friction brakes. Furthermore, the inability of a full battery in a BEV to accept additional charge from the electric motors during braking exacerbates this issue.

Current solutions for braking BEVs and FCEVs include electric resistive burning of electric power from propulsion motors, using electric power to propel an air braked compressor in conjunction with resistive burning of electric power, and classical hydraulic retarder solutions. However, these existing solutions often require significant additional space on the vehicle or are complex, and/or provide limited power. Therefore, there is a need for a simple and effective braking unit that can assist in braking, especially when the battery is full or during demanding conditions such as steep hill descents.

### SUMMARY

According to a first aspect of the disclosure, a braking unit for a fuel cell electric vehicle (FCEV) or a battery electric vehicle (BEV), the FCEV or the BEV comprises a battery, the braking unit comprising a hydraulic motor or a rotary gear pump connected with a propulsion drive shaft or a differential wheel of either of the FCEV or BEV, wherein at least one valve is fluidly connected with the hydraulic motor or the rotary gear pump, the valve is configured to control a fluid flow in and out of the hydraulic motor or the rotary gear pump so as to assist in braking the FCEV or BEV.

The first aspect of the disclosure may seek to solve a problem where braking of FCEV and BEV is in particular a problem for steep hill braking, when normal brake recovery by feed of energy in an out of the battery is not enough and when the brake can be over heated, and braking of BEV is also a problem when the battery is full and cant accumulate charge from the electric motors.

A technical benefit may include providing a low cost, relative low friction, low weight, low space claim brake function for FCEV and BEVs. The ability to control braking via a valve that regulates fluid flow in and out of the hydraulic motor or rotary gear pump allows for a more gradual and controlled braking action. This controlled braking can be particularly beneficial in situations where regenerative braking is limited, such as when the battery is full or during steep hill descents, offering an efficient and adaptable solution for managing vehicle speed and enhancing overall braking performance.

Optionally in some examples, including in at least one preferred example, further comprising one or more resistors for resistive burning of electric power from one of more propulsion motor(s) of the FCEV or BEV during braking. A technical benefit may include the ability to dissipate excess energy generated during braking, especially when regenerative braking is limited due to a full battery or other factors, thereby enhancing overall braking performance and preventing overheating of other braking components.

Optionally in some examples, including in at least one preferred example, further comprising an electric motor for operating a compressor, the compressor is configured to provide cooling of one or more resistors. A technical benefit may include maintaining optimal operating temperatures for the resistors used in resistive burning, preventing thermal overload and ensuring consistent and reliable braking performance, particularly during prolonged or intense braking events.

Optionally in some examples, including in at least one preferred example, further comprising a fluid reservoir providing fluid to the hydraulic motor or the rotary gear pump via the valve. A technical benefit may include ensuring a consistent and readily available supply of fluid for the hydraulic motor or rotary gear pump, maintaining reliable braking performance under various operating conditions and preventing cavitation or other issues related to fluid starvation.

Optionally in some examples, including in at least one preferred example, further comprising a heat exchanger configured cool the fluid. A technical benefit may include dissipating heat generated within the hydraulic system during braking, preventing overheating and maintaining optimal fluid viscosity, which contributes to consistent braking performance and prolongs the lifespan of hydraulic components.

Optionally in some examples, including in at least one preferred example, wherein the valve is configured to limiting the flow in and out of the rotary gear pump until the rotary gear pump is totally oil locked, which then perform a full lock on the propulsion drive shaft or differential wheel. A technical benefit may include providing a failsafe mechanism for achieving maximum braking force, enabling a park brake function, and ensuring vehicle stability under extreme conditions, enhancing overall safety and reliability.

Optionally in some examples, including in at least one preferred example, wherein the valve is a three-way valve. A technical benefit may include providing a versatile means of directing fluid flow within the hydraulic system, allowing for seamless switching between braking, recirculation, and cooling modes, thereby optimizing braking performance and efficiency under various operating conditions.

Optionally in some examples, including in at least one preferred example, wherein the valve has a first port being in fluid communication with the hydraulic motor or rotary gear pump, a second port being in fluid communication with the heat exchanger and a third port being in fluid communication with a recirculating conduit. A technical benefit may include enabling precise control over fluid flow within the braking system, allowing for efficient heat dissipation, recirculation of fluid when braking is not needed, and seamless integration with the hydraulic motor or rotary gear pump, optimizing braking performance and efficiency.

Optionally in some examples, including in at least one preferred example, wherein the valve has a valve shaft. A technical benefit may include a simple and reliable mechanism for controlling the valve, allowing for precise modulation of fluid flow and braking force, enhancing overall braking performance and control.

Optionally in some examples, including in at least one preferred example, wherein a gradual brake function is performed by regulating a shaft angle of the valve shaft so that gradually limiting the flow of oil through the rotary gear pump. A technical benefit may include enabling smooth and controlled braking, preventing abrupt deceleration and enhancing vehicle stability, particularly during emergency braking or challenging road conditions.

Optionally in some examples, including in at least one preferred example, wherein the oil flow is recirculated in/around the rotary gear pump if no braking is needed. A technical benefit may include reducing energy losses and minimizing wear on the hydraulic components, improving overall system efficiency and prolonging the lifespan of the braking system.

Optionally in some examples, including in at least one preferred example, further comprising a control unit. A technical benefit may include automated and precise control over the braking system, allowing for optimized performance based on various operating conditions, vehicle dynamics, and driver inputs, enhancing overall safety and efficiency.

Optionally in some examples, including in at least one preferred example, wherein the control unit is configured to control the braking in different operation and/or capacity modes of the FCEV or BEV. A technical benefit may include tailored braking performance based on specific driving scenarios or vehicle configurations, optimizing safety, efficiency, and driver comfort under various operating conditions.

Optionally in some examples, including in at least one preferred example, wherein one of the operation modes is steep hill braking, where the control unit is configured to control the braking via the hydraulic motor or the rotary gear pump. A technical benefit may include enhanced braking performance and safety during steep hill descents, maintaining a consistent speed and preventing runaway situations, particularly when regenerative braking is limited.

Optionally in some examples, including in at least one preferred example, wherein one of the capacity modes is when the battery is fully charged, where the control unit is configured to control the braking via the hydraulic motor or the rotary gear pump. A technical benefit may include providing alternative braking solutions when the battery is fully charged and unable to accept additional regenerative braking energy, ensuring consistent braking performance and preventing overcharging of the battery.

Optionally in some examples, including in at least one preferred example, wherein the braking unit comprises a park brake function by fully locking the drive shaft or differential wheel. A technical benefit may include a reliable and secure means of preventing vehicle movement when parked, enhancing safety and security under various parking conditions.

Optionally in some examples, including in at least one preferred example, wherein the control unit is configured to switch between regenerative braking and hydraulic braking based on battery charge level. A technical benefit may include optimized energy efficiency and braking performance, utilizing regenerative braking when possible and seamlessly switching to hydraulic braking when the battery is fully charged or other conditions warrant it.

According to a second aspect of the disclosure, a fuel cell electric vehicle (FCEV) having a battery and comprising a braking unit as disclosed herein.

The second aspect of the disclosure may seek to solve a problem where braking of FCEV and BEV is in particular a problem for steep hill braking, when normal brake recovery by feed of energy in an out of the battery is not enough and when the brake can be over heated, and braking of BEV is also a problem when the battery is full and cant accumulate charge from the electric motors.

A technical benefit may include providing a low cost, relative low friction, low weight, low space claim brake function for FCEV and BEVs. The inclusion of the braking unit allows for a more gradual and controlled braking action, particularly beneficial in situations where regenerative braking is limited, such as when the battery is full or during steep hill descents, offering an efficient and adaptable solution for managing vehicle speed and enhancing overall braking performance.

According to a third aspect of the disclosure, a battery electric vehicle (BEV) having a battery and comprising a braking unit as described herein.

The third aspect of the disclosure may seek to solve a problem where braking of FCEV and BEV is in particular a problem for steep hill braking, when normal brake recovery by feed of energy in an out of the battery is not enough and when the brake can be over heated, and braking of BEV is also a problem when the battery is full and cant accumulate charge from the electric motors.

A technical benefit may include providing a low cost, relative low friction, low weight, low space claim brake function for FCEV and BEVs. The inclusion of the braking unit allows for a more gradual and controlled braking action, particularly beneficial in situations where regenerative braking is limited, such as when the battery is full or during steep hill descents, offering an efficient and adaptable solution for managing vehicle speed and enhancing overall braking performance.

According to a fourth aspect of the disclosure, a method for braking a fuel cell electric vehicle (FCEV) or a battery electric vehicle (BEV), the method comprising: engaging a hydraulic motor or a rotary gear pump connected to a propulsion drive shaft or a differential wheel of the FCEV or BEV,
controlling fluid flow in and out of the hydraulic motor or rotary gear pump using at least one valve, thereby assisting in the braking process of the FCEV or BEV,
adjusting the valve to regulate the fluid flow, thereby modulating the braking force applied by the hydraulic motor or rotary gear pump to achieve the desired braking effect.

The fourth aspect of the disclosure may seek to solve a problem where braking of FCEV and BEV is in particular a problem for steep hill braking, when normal brake recovery by feed of energy in an out of the battery is not enough and when the brake can be over heated, and braking of BEV is also a problem when the battery is full and cant accumulate charge from the electric motors.

A technical benefit may include providing a low cost, relative low friction, low weight, low space claim brake function for FCEV and BEVs. The method allows for a more gradual and controlled braking action by controlling fluid flow in and out of the hydraulic motor or rotary gear pump, particularly beneficial in situations where regenerative braking is limited, such as when the battery is full or during steep hill descents, offering an efficient and adaptable solution for managing vehicle speed and enhancing overall braking performance.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary braking unit according to an example.
**FIGS. 2a-2c** show the valve in different positions.
**FIG. 3** is an exemplary of a vehicle having a braking unit.
**FIG. 4** is another view of **FIG. 1****,** according to an example.

### DETAILED DESCRIPTION

The detailed description set forth below provides information and examples of the disclosed technology with sufficient detail to enable those skilled in the art to practice the disclosure.

The disclosed technology addresses the challenges associated with braking in fuel cell electric vehicles (FCEVs) and battery electric vehicles (BEVs), particularly in situations where traditional braking methods are insufficient. A primary issue arises during steep hill braking, where the energy regenerated and fed back into the battery is inadequate, leading to potential overheating of conventional brakes. Additionally, when the battery is fully charged, it cannot accept further energy from regenerative braking, further complicating the braking process.

To overcome these limitations, the disclosed technology introduces a braking unit comprising a hydraulic motor or rotary gear pump connected to the propulsion drive shaft or differential wheel of the FCEV or BEV. At least one valve, fluidly connected to the hydraulic motor or rotary gear pump, controls the fluid flow in and out of these components, thereby assisting in braking. This arrangement allows for a controlled and modulated braking force, which can be particularly beneficial when regenerative braking is limited.

The advantages of the disclosed technology include providing a low-cost, relatively low friction, low-weight, and low-space-claim braking solution for FCEVs and BEVs. By controlling the fluid flow via the valve, the braking action can be gradual and precisely managed. In some examples, the braking unit further comprises one or more resistors for resistive burning of electric power from the propulsion motors during braking, along with an electric motor-operated compressor to cool these resistors. This configuration enhances braking performance and prevents overheating. The system may also include a fluid reservoir, a heat exchanger for cooling the fluid, and a control unit for managing braking in different operation and capacity modes, such as steep hill braking or when the battery is fully charged.

The advantage of the disclosure over the prior solutions lies in its simplicity, adaptability, and efficiency. Unlike existing solutions that may require significant additional space or offer limited power, the disclosed technology provides a compact and integrated braking solution. The use of a valve to control fluid flow enables a more responsive and controlled braking action compared to traditional methods.

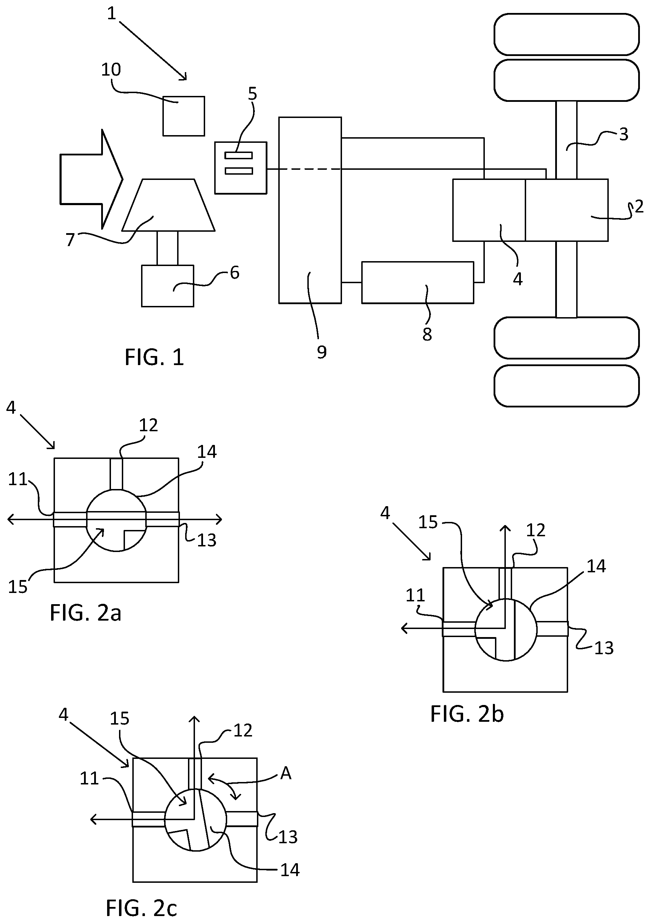

**FIG. 1** is an exemplary braking unit **1** according to an example. The braking unit **1** is to be used in a fuel cell electric vehicle (FCEV) or a battery electric vehicle (BEV), the FCEV or the BEV comprises a battery. The braking unit **1** comprises a hydraulic motor or a rotary gear pump **2** connected with a propulsion drive shaft **3** or a differential wheel of either of the FCEV or BEV and at least one valve **4** being fluidly connected with the hydraulic motor or the rotary gear pump **2,** the valve **4** is configured to control a fluid flow in and out of the hydraulic motor or the rotary gear pump **2** so as to assist in braking the FCEV or BEV.

In the case of a rotary gear pump **2,** such as a cogwheel pump, the valve **4** restricts the flow of fluid both into and out of the pump **2.** As the pump **2** is mechanically linked to the vehicle's propulsion drive shaft or differential wheel, it rotates with the wheels. When the valve **4** begins to restrict the outlet flow, the fluid within the pump becomes compressed. This compression creates resistance against the rotation of the pump, which in turn resists the rotation of the drive shaft or differential wheel. This resistance is what provides the braking force.

The degree of braking is directly proportional to the degree of flow restriction imposed by the valve **4.** A slight restriction results in a gentle braking effect, while a greater restriction leads to more aggressive braking. In some examples, the valve **4** can completely block the fluid flow, effectively locking the rotary gear pump and providing a full lock on the drive shaft or differential wheel, serving as a park brake.

In the example of **FIG. 1****,** the braking unit 1 may also comprise one or more resistors **5** for resistive burning of electric power from one of more propulsion motor(s) of the FCEV or BEV during braking. A technical benefit may include the ability to dissipate excess energy generated during braking, especially when regenerative braking is limited due to a full battery or other factors, thereby enhancing overall braking performance and preventing overheating of other braking components.

Moreover, an electric motor **6** for operating a compressor **7** may be arranged. The compressor **7** may be configured to provide cooling of one or more resistors **5.** A technical benefit may include maintaining optimal operating temperatures for the resistors used in resistive burning, preventing thermal overload and ensuring consistent and reliable braking performance, particularly during prolonged or intense braking events.

The braking unit **1** may also comprise a fluid reservoir **8** providing fluid to the hydraulic motor or the rotary gear pump **2** via the valve **4.** A technical benefit may include ensuring a consistent and readily available supply of fluid for the hydraulic motor or rotary gear pump, maintaining reliable braking performance under various operating conditions and preventing cavitation or other issues related to fluid starvation. The fluid may be an oil.

The fluid reservoir **8** may be configured to maintain a predetermined fluid level to ensure consistent braking performance. A technical benefit may include preventing fluid starvation and ensuring reliable braking performance under various operating conditions, enhancing overall safety and control.

A heat exchanger **9** may be arranged for cooling the fluid. A technical benefit may include dissipating heat generated within the hydraulic system during braking, preventing overheating and maintaining optimal fluid viscosity, which contributes to consistent braking performance and prolongs the lifespan of hydraulic components. The heat exchanger 9 may be an air heat exchanger. A technical benefit may include a cost-effective and relatively simple solution for cooling the hydraulic fluid, utilizing ambient air to dissipate heat without requiring additional cooling circuits or fluids, thereby reducing system complexity and maintenance requirements.

Also, the compressor **7** may be an air compressor. A technical benefit may include providing a readily available and easily integrated means of cooling the resistors or heat exchanger, leveraging compressed air to efficiently dissipate heat and maintain optimal operating temperatures during braking events.

In an example, the compressor **7** is arranged for providing an air flow to the one or more resistors **5** and/or the heat exchanger **9.** A technical benefit may include targeted and efficient cooling of critical components, ensuring optimal heat dissipation and preventing thermal overload, which enhances braking performance and reliability, particularly during demanding operating conditions. Hence, the compressor **7** may be used to enhance the cooling effect of the heat exchanger **9.**

Moreover, the rotary gear pump **2** may be a cogwheel pump. A technical benefit may include a simple, robust, and cost-effective design for the rotary gear pump **2,** providing reliable fluid displacement for braking purposes while minimizing manufacturing costs and complexity.

The braking unit **1** may further comprise a temperature sensor so that the temperature of the fluid may be monitored, allowing for proactive adjustments to cooling or braking force to prevent overheating and maintain optimal performance.

In addition, the braking unit **1** may also comprise a control unit **10.** The control unit **10** may assists in automated and precise control over the braking system, allowing for optimized performance based on various operating conditions, vehicle dynamics, and driver inputs, enhancing overall safety and efficiency.

The control unit **10** may include a microprocessor, microcontroller, programmable digital signal processor or another programmable device. The control unit **10** may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

The control unit **10** may be operatively connected with the battery, the resistor **5,** the electric motor **6,** the compressor **7,** the hydraulic motor, the rotary gear pump **2,** the valve **4,** the heat exchanger **9** and/or the temperature sensor. A technical benefit may include comprehensive monitoring and control over all aspects of the braking system, allowing for seamless integration with other vehicle systems and optimized performance under a wide range of operating conditions.

**In** **FIGS. 2a-2c****,** an example of the valve **4** is shown in different positions. In the example, the valve **4** is a three-way valve. A technical benefit may include providing a versatile means of directing fluid flow within the hydraulic system, allowing for seamless switching between braking, recirculation, and cooling modes, thereby optimizing braking performance and efficiency under various operating conditions. The valve **4** may have a first port **11** being in fluid communication with the hydraulic motor or rotary gear pump, a second port **12** being in fluid communication with the heat exchanger and a third port **13** being in fluid communication with a recirculating conduit. A technical benefit may include enabling precise control over fluid flow within the braking system, allowing for efficient heat dissipation, recirculation of fluid when braking is not needed, and seamless integration with the hydraulic motor or rotary gear pump, optimizing braking performance and efficiency. In addition, the valve **4** has a valve shaft **14.** A technical benefit may include a simple and reliable mechanism for controlling the valve, allowing for precise modulation of fluid flow and braking force, enhancing overall braking performance and control. The valve shaft **14** may comprise a space **15** enabling the different ports to be connected while rotating the valve shaft **14.**

In **FIG. 2a****,** the valve **4** is shown in the recirculating position where the first port **11** and the third port **13** are fluidly connected so that if no braking is needed the oil flow is recirculated in/around the rotary gear pump. In this position, the friction of the re-circulated oil through the rotary gear pump could be hold relatively low and could most probably be designed to be lower than in a conventional converter design.

In **FIG. 2b****,** the valve **4** is shown in the cooling position where the first port **11** and the second port **12** are fluidly connected. In this position, the oil may be circulated into the heat exchanger and back for the rotary gear pump. During braking by limiting the oil flow through the rotary gear pump by the valve the oil get hot due to friction, therefore the oil need to pass on the air heat exchanger.

In **FIG. 2c****,** the valve **4** is shown in the regulating position. The valve shaft **14** may be rotated so as to adjust the flow of oil to and from the rotary gear pump as indicated by arrow A. The braking is accomplished by limiting the flow in and out of the rotary gear pump all the way until the pump are totally oil locked, which then perform a full lock on the drive shaft axle **3** or differential wheel. The gradual brake function is performed by e.g. a regulating the valve shaft angle that gradually limit the flow of oil through the rotary pump.

Furthermore, an additional valve may be arranged in connection with the valve **4.** A technical benefit may include enhanced control and modulation of fluid flow within the braking system, allowing for more precise adjustments to braking force and optimized performance under varying operating conditions. The valve **4** and the additional valve are arranged so that they share the same valve shaft. A technical benefit may include simplifying the control mechanism and reducing the number of components required, leading to a more compact, reliable, and cost-effective braking system.

Also, the valve **4** may be configured to provide a variable flow rate to accommodate different braking intensities. A technical benefit may include precise control over braking force, allowing for smooth and responsive braking under various driving conditions, enhancing overall driver comfort and control.

According to the disclosure, a gradual brake function may be performed by regulating a shaft angle of the valve shaft **14** so that gradually limiting the flow of oil through the rotary gear pump **2.** A technical benefit may include enabling smooth and controlled braking, preventing abrupt deceleration and enhancing vehicle stability, particularly during emergency braking or challenging road conditions.

In addition, the control unit **10** may be configured to control the braking in different operation and/or capacity modes of the FCEV or BEV. A technical benefit may include tailored braking performance based on specific driving scenarios or vehicle configurations, optimizing safety, efficiency, and driver comfort under various operating conditions. One of the operation modes may be steep hill braking, where the control unit **10** is configured to control the braking via the hydraulic motor or the rotary gear pump **2.** A technical benefit may include enhanced braking performance and safety during steep hill descents, maintaining a consistent speed and preventing runaway situations, particularly when regenerative braking is limited.

Furthermore, one of the capacity modes may be when the battery is fully charged, where the control unit **10** is configured to control the braking via the hydraulic motor or the rotary gear pump **2.** A technical benefit may include providing alternative braking solutions when the battery is fully charged and unable to accept additional regenerative braking energy, ensuring consistent braking performance and preventing overcharging of the battery.

Also, the braking unit **1** may comprise a park brake function by fully locking the drive shaft or differential wheel. A technical benefit may include a reliable and secure means of preventing vehicle movement when parked, enhancing safety and security under various parking conditions.

Moreover, the braking unit **1** may comprise a pressure sensor for monitoring fluid pressure within the hydraulic motor or rotary gear pump. A technical benefit may include real-time monitoring of hydraulic pressure, allowing for early detection of leaks or other issues, preventing component failure and ensuring consistent braking performance.

The control unit **10** may also comprise a feedback loop for adjusting braking force based on vehicle speed. A technical benefit may include optimized braking performance based on vehicle speed, preventing wheel lockup and maintaining vehicle stability during braking events, enhancing overall safety and control. Furthermore, the control unit **10** may be configured to switch between regenerative braking and hydraulic braking based on battery charge level. A technical benefit may include optimized energy efficiency and braking performance, utilizing regenerative braking when possible and seamlessly switching to hydraulic braking when the battery is fully charged or other conditions warrant it.

In an example, the hydraulic motor or rotary gear pump may be configured for bidirectional fluid flow to accommodate braking in both forward and reverse directions. A technical benefit may include consistent and reliable braking performance regardless of vehicle direction, enhancing safety and control during maneuvering and parking.

Furthermore, the braking unit **1** may comprises a diagnostic system for detecting faults in the hydraulic motor or rotary gear pump. A technical benefit may include early detection of potential issues, preventing component failure and ensuring consistent braking performance, enhancing overall safety and reliability.

The present disclosure also relates to a fuel cell electric vehicle **100** comprising a braking unit **1** as disclosed herein.

The present disclosure also relates to a battery electric vehicle **100** comprising a braking unit **1** as disclosed herein.

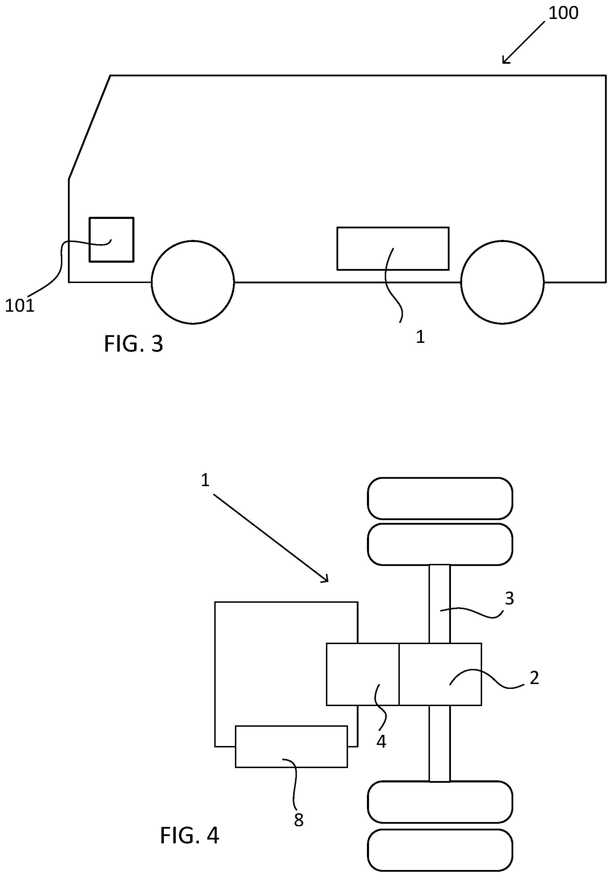

As seen in **FIG. 3****,** the vehicle **100** may comprises an input device **101** which may be activated by the operator of the vehicle **100.** The input device **101** may indicate a braking force for the vehicle **100.** In another example, the input device **101** may be activated automatically.

The present disclosure also relates to a method for braking a fuel cell electric vehicle (FCEV) or a battery electric vehicle (BEV), the method comprising:
- engaging a hydraulic motor or a rotary gear pump connected to a propulsion drive shaft or a differential wheel of the FCEV or BEV,
- controlling fluid flow in and out of the hydraulic motor or rotary gear pump using at least one valve, thereby assisting in the braking process of the FCEV or BEV,
- adjusting the valve to regulate the fluid flow, thereby modulating the braking force applied by the hydraulic motor or rotary gear pump to achieve the desired braking effect.

The method may further comprise configuring a control unit **10** to manage braking in various operation and/or capacity modes of the FCEV or BEV, wherein the control unit 10 modulates the engagement of the hydraulic motor or rotary gear pump **2** based on the selected mode. A technical benefit may include tailored braking performance based on specific driving scenarios or vehicle configurations, optimizing safety, efficiency, and driver comfort under various operating conditions.

Furthermore, the method may comprise implementing a steep hill braking mode, wherein the control unit **10** directs the hydraulic motor or rotary gear pump 2 to provide enhanced braking force suitable for descending steep inclines, thereby ensuring safe and controlled deceleration of the FCEV or BEV. A technical benefit may include enhanced braking performance and safety during steep hill descents, maintaining a consistent speed and preventing runaway situations, particularly when regenerative braking is limited.

Moreover, the method may also comprise activating a fully charged battery capacity mode, wherein the control unit **10** utilizes the hydraulic motor or rotary gear pump to manage braking when the battery is at or near full charge. A technical benefit may include providing alternative braking solutions when the battery is fully charged and unable to accept additional regenerative braking energy, ensuring consistent braking performance and preventing overcharging of the battery.

**FIG. 4** is another view of **FIG. 1****,** according to an example. In **FIG. 4****,** a braking unit **1** for a fuel cell electric vehicle (FCEV) or a battery electric vehicle (BEV), the FCEV or the BEV comprises a battery, is shown. The braking unit **1** comprises a hydraulic motor or a rotary gear pump **2** connected with a propulsion drive shaft **3** or a differential wheel of either of the FCEV or BEV, wherein at least one valve **4** is fluidly connected with the hydraulic motor or the rotary gear pump **2,** the valve **4** is configured to control a fluid flow in and out of the hydraulic motor or the rotary gear pump **2** so as to assist in braking the FCEV or BEV.

Certain aspects and variants of the disclosure are set forth in the following examples numbered consecutive below.

Example 1: A braking unit (1) for a fuel cell electric vehicle (FCEV) or a battery electric vehicle (BEV) (100), the FCEV or the BEV comprises a battery, the braking unit (1) comprising a hydraulic motor or a rotary gear pump (2) connected with a propulsion drive shaft (3) or a differential wheel of either of the FCEV or BEV, wherein at least one valve (4) is fluidly connected with the hydraulic motor or the rotary gear pump (2), the valve (4) is configured to control a fluid flow in and out of the hydraulic motor or the rotary gear pump so as to assist in braking the FCEV or BEV.

Example 2: The braking unit (1) of example 1, further comprising one or more resistors (5) for resistive burning of electric power from one of more propulsion motor(s) of the FCEV or BEV during braking.

Example 3: The braking unit (1) of example 2, further comprising an electric motor (6) for operating a compressor (7), the compressor (7) is configured to provide cooling of one or more resistors (5).

Example 4: The braking unit (1) of any of examples 1-3, further comprising a fluid reservoir (8) providing fluid to the hydraulic motor or the rotary gear pump (2) via the valve (4).

Example 5: The braking unit (1) of any of examples 1-4, further comprising a heat exchanger (9) configured cool the fluid.

Example 6: The braking unit (1) of example 5, wherein the heat exchanger (9) is an air heat exchanger.

Example 7: The braking unit (1) of any of the examples 3-6, wherein the compressor (7) is an air compressor.

Example 8: The braking unit (1) of any of the examples 3-7, wherein the compressor (7) is arranged for providing an air flow to the one or more resistors (5) and/or the heat exchanger (9).

Example 9: The braking unit (1) of any of the examples 1-8, wherein the rotary gear pump (2) is a cogwheel pump.

Example 10: The braking unit (1) of any of the examples 1-9, wherein the fluid is oil.

Example 11: The braking unit (1) of any of the examples 1-10, wherein the valve (4) is configured to limiting the flow in and out of the rotary gear pump (2) until the rotary gear pump (2) is totally oil locked, which then perform a full lock on the propulsion drive shaft (3) or differential wheel.

Example 12: The braking unit (1) of any of the examples 1-11, wherein the valve (4) is a three-way valve.

Example 13: The braking unit (1) of any of the examples 1-12, wherein the valve (4) has a first port (11) being in fluid communication with the hydraulic motor or rotary gear pump, a second port (12) being in fluid communication with the heat exchanger and a third port (13) being in fluid communication with a recirculating conduit.

Example 14: The braking unit (1) of any of the examples 1-13, wherein the valve (4) has a valve shaft (14).

Example 15: The braking unit (1) of any of the examples 1-14, wherein an additional valve is arranged in connection with the valve (4).

Example 16: The braking unit (1) of example 15, wherein the valve (4) and the additional valve are arranged so that they share the same valve shaft (14).

Example 17: The braking unit (1) of any of the examples 14-16, wherein a gradual brake function is performed by regulating a shaft angle of the valve shaft (14) so that gradually limiting the flow of oil through the rotary gear pump (2).

Example 18: The braking unit (1) of any of the examples 1-17, wherein the oil flow is recirculated in/around the rotary gear pump (2) if no braking is needed.

Example 19: The braking unit (1) of any of the examples 1-18, further comprising a temperature sensor.

Example 20: The braking unit (1) of any of the examples 1-19, further comprising a control unit (10).

Example 21: The braking unit (1) of example 20, wherein the control unit (10) is operatively connected with the battery, the resistor (5), the electric motor (6), the compressor (7), the hydraulic motor, the rotary gear pump (2), the valve (4), the heat exchanger (9) and/or the temperature sensor.

Example 22: The braking unit (1) of any of the examples 20-21, wherein the control unit (10) is configured to control the braking in different operation and/or capacity modes of the FCEV or BEV.

Example 23: The braking unit (1) of example 22, wherein one of the operation modes is steep hill braking, where the control unit (10) is configured to control the braking via the hydraulic motor or the rotary gear pump (2).

Example 24: The braking unit (1) of any of examples 22-23, wherein one of the capacity modes is when the battery is fully charged, where the control unit (10) is configured to control the braking via the hydraulic motor or the rotary gear pump.

Example 25: The braking unit (1) of any of the examples 1-24, wherein the braking unit (1) comprises a park brake function by fully locking the drive shaft or differential wheel.

Example 26: The braking unit (1) of any of the examples 1-25, further comprising a pressure sensor for monitoring fluid pressure within the hydraulic motor or rotary gear pump.

Example 27: The braking unit (1) of any of the examples 20-26, wherein the control unit (10) comprises a feedback loop for adjusting braking force based on vehicle speed.

Example 28: The braking unit (1) of any of the examples 1-27, wherein the braking unit (1) is integrated with an electric e-axle of the FCEV or BEV.

Example 29: The braking unit (1) of any of the examples 20-28, wherein the control unit (10) is configured to switch between regenerative braking and hydraulic braking based on battery charge level.

Example 30: The braking unit (1) of any of the examples 1-29, wherein the hydraulic motor or rotary gear pump (2) is configured for bidirectional fluid flow to accommodate braking in both forward and reverse directions.

Example 31: The braking unit (1) of any of the examples 3-30, wherein the fluid reservoir (8) is configured to maintain a predetermined fluid level to ensure consistent braking performance.

Example 32: The braking unit (1) of any of the examples 1-31, wherein the compressor (7) is configured to activate based on the temperature of the resistors (5) and/or the hydraulic motor or rotary gear pump (2).

Example 33: The braking unit (1) of any of the examples 1-32, further comprising a manual override for the braking unit to ensure function in electronic failure scenarios.

Example 34: The braking unit (1) of any of the examples 1-33, wherein the valve (4) is configured to provide a variable flow rate to accommodate different braking intensities.

Example 35: The braking unit (1) of any of the examples 1-34, wherein the braking unit (1) comprises a diagnostic system for detecting faults in the hydraulic motor or rotary gear pump.

Example 36: A fuel cell electric vehicle (FCEV) (100) having a battery and comprising a braking unit (1) of any of the examples 1-35.

Example 37: A battery electric vehicle (BEV) (100) having a battery and comprising a braking unit (1) of any of the examples 1-35.

Example 38: A method for braking a fuel cell electric vehicle (FCEV) (100) or a battery electric vehicle (BEV) (100), the method comprising:
engaging a hydraulic motor or a rotary gear pump (2) connected to a propulsion drive shaft (3) or a differential wheel of the FCEV or BEV,
controlling fluid flow in and out of the hydraulic motor or rotary gear pump (2) using at least one valve (4), thereby assisting in the braking process of the FCEV or BEV,
adjusting the valve (4) to regulate the fluid flow, thereby modulating the braking force applied by the hydraulic motor or rotary gear pump (2) to achieve the desired braking effect.

Example 39: The method of example 38, further comprising generating resistive heat by burning electric power from one or more propulsion motors of the FCEV or BEV using one or more resistors (5) during a braking event.

Example 40: The method of example 39, further comprising operating an electric motor (6) to drive a compressor (7), wherein the compressor provides cooling to the one or more resistors to manage the generated heat.

Example 41: The method of any of examples 38-40, further comprising configuring a control unit (10) to manage braking in various operation and/or capacity modes of the FCEV or BEV, wherein the control unit (10) modulates the engagement of the hydraulic motor or rotary gear pump (2) based on the selected mode.

Example 42: The method of example 41, further comprising implementing a steep hill braking mode, wherein the control unit (10) directs the hydraulic motor or rotary gear pump (2) to provide enhanced braking force suitable for descending steep inclines, thereby ensuring safe and controlled deceleration of the FCEV or BEV.

Example 43: The method of example 41, further comprising activating a fully charged battery capacity mode, wherein the control unit (10) utilizes the hydraulic motor or rotary gear pump (2) to manage braking when the battery is at or near full charge.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A braking unit (1) for a fuel cell electric vehicle (FCEV) or a battery electric vehicle (BEV) (100), the FCEV or the BEV comprises a battery, the braking unit (1) comprising a hydraulic motor or a rotary gear pump (2) connected with a propulsion drive shaft (3) or a differential wheel of either of the FCEV or BEV,
wherein at least one valve (4) is fluidly connected with the hydraulic motor or the rotary gear pump (2), the valve (4) is configured to control a fluid flow in and out of the hydraulic motor or the rotary gear pump so as to assist in braking the FCEV or BEV.

2. The braking unit (1) of claim 1, further comprising one or more resistors (5) for resistive burning of electric power from one of more propulsion motor(s) of the FCEV or BEV during braking.

3. The braking unit (1) of claim 2, further comprising an electric motor (6) for operating a compressor (7), the compressor (7) is configured to provide cooling of one or more resistors (5).

4. The braking unit (1) of any of claims 1-3, further comprising a heat exchanger (9) configured cool the fluid.

5. The braking unit (1) of any of the claims 1-4, wherein the valve (4) is configured to limiting the flow in and out of the rotary gear pump (2) until the rotary gear pump (2) is totally oil locked, which then perform a full lock on the propulsion drive shaft (3) or differential wheel.

6. The braking unit (1) of any of the claims 1-5, wherein the valve (4) has a first port (11) being in fluid communication with the hydraulic motor or rotary gear pump, a second port (12) being in fluid communication with the heat exchanger and a third port (13) being in fluid communication with a recirculating conduit.

7. The braking unit (1) of any of the claims 1-6, wherein the valve (4) has a valve shaft (14).

8. The braking unit (1) of claim 7, wherein a gradual brake function is performed by regulating a shaft angle of the valve shaft (14) so that gradually limiting the flow of oil through the rotary gear pump (2).

9. The braking unit (1) of any of the claims 1-8, further comprising a control unit (10).

10. The braking unit (1) of claim 9, wherein the control unit (10) is configured to control the braking in different operation and/or capacity modes of the FCEV or BEV.

11. The braking unit (1) of claim 10, wherein one of the operation modes is steep hill braking, where the control unit (10) is configured to control the braking via the hydraulic motor or the rotary gear pump (2).

12. The braking unit (1) of any of claims 10-11, wherein one of the capacity modes is when the battery is fully charged, where the control unit (10) is configured to control the braking via the hydraulic motor or the rotary gear pump.

13. A fuel cell electric vehicle (FCEV) (100) having a battery and comprising a braking unit (1) of any of the claims 1-12.

14. A battery electric vehicle (BEV) (100) having a battery and comprising a braking unit (1) of any of the claims 1-12.

15. A method for braking a fuel cell electric vehicle (FCEV) (100) or a battery electric vehicle (BEV) (100), the method comprising:
- engaging a hydraulic motor or a rotary gear pump (2) connected to a propulsion drive shaft (3) or a differential wheel of the FCEV or BEV,
- controlling fluid flow in and out of the hydraulic motor or rotary gear pump (2) using at least one valve (4), thereby assisting in the braking process of the FCEV or BEV,
- adjusting the valve (4) to regulate the fluid flow, thereby modulating the braking force applied by the hydraulic motor or rotary gear pump (2) to achieve the desired braking effect.
